Europäisches Patentamt

European Patent Office

Office européen des brevets

(11) Veröffentlichungsnummer: **0 516 254 A1**

## EUROPÄISCHE PATENTANMELDUNG

(21) Anmeldenummer: **92250119.2**

(22) Anmeldetag: **12.05.92**

(51) Int. Cl.5: **E05D 5/12**, E05D 7/10, H02B 1/38

(30) Priorität: **30.05.91 DE 9106668 U**

(43) Veröffentlichungstag der Anmeldung:
**02.12.92 Patentblatt 92/49**

(84) Benannte Vertragsstaaten:
**AT BE CH DE ES FR GB GR IT LI NL SE**

(71) Anmelder: **SIEMENS AKTIENGESELLSCHAFT**
**Wittelsbacherplatz 2**
**W-8000 München 2(DE)**

(72) Erfinder: **Feuerbach, Manfred**
**Hartmann-Ibach-Strasse 83**
**W-6000 Frankfurt 60(DE)**
Erfinder: **Rössler, Karl-Heinz**
**Wilhelmbaderstrasse 23**
**W-6457 Maintal 1(DE)**

(54) Scharnieranordnung für die Tür eines Schaltschrankes.

(57) Eine Scharnieranordnung für einen Schaltschrank umfaßt einen feststehenden Scharnierarm (3) sowie einen im Innenraum der Abkantung (6) einer Tür befestigten Scharnierbock (10). Ein Scharnierbolzen (11) mit einem krückstockartigen Endteil (13) ist in fluchtende Öffnungen des Scharnierarmes und des Lagerbockes einführbar. Zwischen einem Bolzenteil (12) des Scharnierbolzens (11) und dessen Endteil (13) befindet sich ein Zwischenteil (14), der sich vorzugsweise an einen Bereich (15) von geschwächtem Querschnitt anschließt. Durch eine bleibende Verformung tritt der Endteil (13) in eine Öffnung (17) der Tür (2) ein und sichert den Scharnierbolzen (11) gegen Entfernung.

FIG 1

Die Erfindung betrifft eine Scharnieranordnung für eine aus Blech bestehende und mit einer randseitigen Abkantung versehene Tür eines Schaltschrankes, mit einem ortsfesten Scharnierarm und einem an der Tür befestigten Scharnierbock sowie mit einem Scharnierbolzen, der aus einem Rundmaterial besteht und einen fluchtende Durchtrittsöffnungen des Scharnierarmes und des Scharnierbockes durchsetzenden geraden Bolzenabschnitt und einen krückenartig gebogenen, eine Stirnfläche aufweisenden Endteil besitzt, der etwa rechtwinklig zur Längsachse des Bolzenabschnittes gerichtet ist.

Eine Scharnieranordnung dieser Art ist beispielsweise durch die EP-B-0 192 520 bekannt geworden. Der Scharnierbolzen wird zur Montage der Tür an dem Schrankkorpus in die fluchtenden Öffnungen eingesteckt und verbleibt dort ohne besondere Sicherung. Es ist aber oft erwünscht, den Scharnierbolzen gegen eine Entfernung oder Lösung aufgrund eines beliebigen Einflusses zu sichern. Dennoch soll der Scharnierbolzen im Bedarfsfall auf einfache Weise, d. h. ohne spezielle Werkzeuge, wieder gelöst werden können. Dies kann beispielsweise erwünscht sein, um zur Verbesserung des Zuganges zum Inneren des Schaltschrankes die Tür vorübergehend zu entfernen.

Die Erfindung löst diese Aufgabe dadurch, daß der Scharnierbolzen aus einem bleibend verformbaren Werkstoff besteht, daß ferner zwischen dem krückenartig geformten Endteil und dem Bolzenteil ein Zwischenteil angeordnet ist und daß im Bereich der Abkantung der Tür eine der Stirnfläche des Endteiles mit geringem Abstand gegenüberstehende Öffnung für den Eingriff des Endteiles angeordnet ist. Auf diese Weise kann der Endteil des Scharnierbolzens so verformt werden, daß der Endteil bleibend zum Eingreifen in die Öffnung gebracht wird. Eine axiale Verschiebung des Scharnierbolzens und damit eine Trennung der zusammenwirkenden Teile der Scharnieranordnung wird auf diese Weise verhindert. Jedoch kann die Biegung durch ein allgemein verfügbares Werkzeug, wie eine Zange, ein Schraubendreher, ein Haken oder dergleichen rückgängig gemacht und damit der hakenartige Endteil wieder außer Eingriff mit der Öffnung gebracht werden.

Um den erläuterten Biegevorgang zu erleichtern, kann etwa am Übergang zwischen dem geraden Bolzenteil und dem Zwischenteil ein Bereich mit geschwächtem Querschnitt vorgesehen sein. Als geeignet erweist sich in diesem Zusammenhang eine Schwächung des Querschnittes auf ein Drittel des normalen Querschnittes des Scharnierbolzens. Je nach der Eigenschaft des Werkstoffes, der absoluten Größe des geschwächten Querschnittes und der Länge des Zwischenteiles genügt dann die Ausübung eines Druckes von Hand oder ein leichter Schlag mit einem Hammer, um die gewünschte bleibende Verformung zu bewirken.

Nach einer weiteren Ausgestaltung der Erfindung kann der Zwischenteil mit gleicher oder wechselnder Richtung kreisbogenförmig ausgebildet und an den Bereich mit geschwächtem Querschnitt unmittelbar anschließend angeordnet sein. Die Handhabung bei der Biegung und zum Einführen oder Entfernen des Scharnierbolzens wird dadurch noch verbessert.

Die Erfindung wird im folgenden anhand des in den Figuren dargestellten Ausführungsbeispieles näher erläutert.

Die Figur 1 zeigt eine Scharnieranordnung in einer Seitenansicht sowie teilweise geschnittene angrenzende Bauteile eines Schaltschrankes mit unverformtem Scharnierbolzen.

Die Figur 2 entspricht der Darstellung gemäß der Figur 1 mit dem Unterschied, daß der Scharnierbolzen zur Sicherung gegen Entfernung bleibend verformt ist.

Die Figur 3 zeigt die Scharnieranordnung gemäß den Figuren 1 und 2 in der Draufsicht mit geschnitten dargestellten Scharnierbolzen.

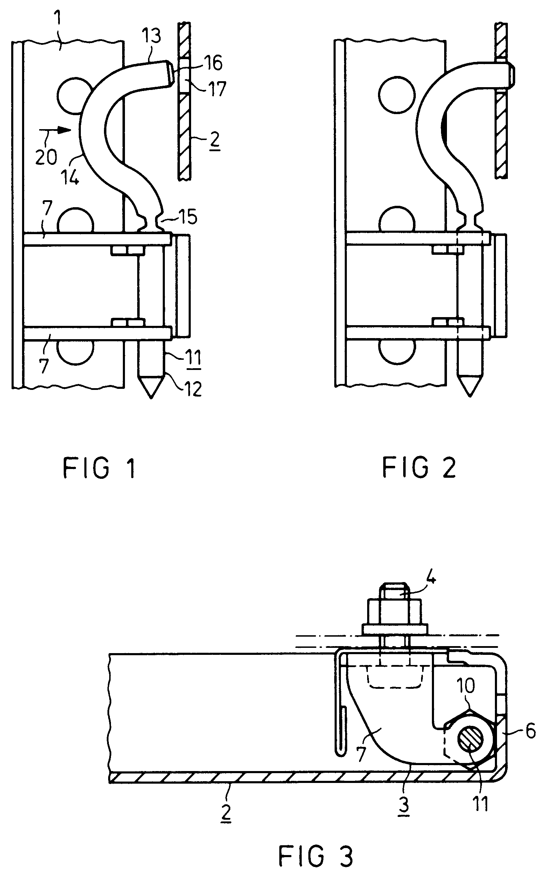

In den Figuren 1, 2 und 3 sind abgebrochen ein vertikales Profilelement 1 des Gerüstes eines Schaltschrankes sowie eine als frontseitiger Abschluß des Schaltschrankes vorgesehene Tür 2 gezeigt. An dem Profilelement 1 ist eine gabelartiger Scharnierarm 3 mittels einer Schraube 4 befestigt. Die Tür 2 besitzt am Rand eine Abkantung 6 (Fig. 3), in welche Gabelarme 7 des Scharnierarmes 3 hineinragen. Im Bereich der Abkantung 6 der Tür 2 ist ein türseitiger Lagerbock 10 in der Gestalt eines Profilstückes befestigt. Der Abstand der Gabelarme 7 des Scharnierarmes 3 ist entsprechend der Länge des Lagerbockes 10 bemessen. In den Figuren 1 und 2 ist der Lagerbock fortgelassen, um den Scharnierstift vollständig darstellen zu können, der im folgenden näher beschrieben wird.

Wie insbesondere den Figuren 1 und 2 zu entnehmen ist, dient zur Verbindung des Scharnierarmes 3 und des Lagerbockes 10 ein Scharnierbolzen 11, der einen geraden, am unteren Ende spitz zulaufenden Bolzenteil 12 und am entgegengesetzten Ende einen krückenartig geformten Endteil 13 aufweist. Zwischen dem Bolzenteil 12 und dem Endteil 13 erstreckt sich ein Zwischenteil 14, der aus Kreisbögen mit entgegengesetzter Krümmung zusammengesetzt ist. Am Übergang zwischen dem geraden Bolzenteil 12 und dem Zwischenteil 14 befindet sich ein Bereich 15, in dem der Querschnitt auf etwa ein Drittel des normalen Durchmessers des Scharnierbolzens 11 geschwächt ist.

Im Ausgangszustand, den die Figur 1 zeigt, ist der Scharnierbolzens 11 so geformt, daß eine Stirnfläche 16 des Endteiles 13 einer Öffnung 17 in der Tür 2 mit einem geringen Abstand gegenübersteht. In dieser Gestaltung ist der Scharnierbolzen 11 in die fluchtenden Öffnungen der Gabelarme 7 des Scharnierarmes 3 und des Lagerbockes 10 leicht einführbar, wobei die Spitze am unteren Ende des Bolzenteiles 12 und die bogenförmige Gestaltung des Zwischenteiles 14 die Handhabung erleichtern. Ausgehend von der in der Figur 1 gezeigten Stellung der Teile wird dann der Endteil 13 mit der Öffnung 17 der Tür 2 in der Weise in Eingriff gebracht, wie dies die Figur 2 zeigt. Hierzu genügt es unter Umständen, von Hand in Richtung des in der Figur 1 gezeigten Pfeiles 20 einen Druck auf den Zwischenteil 14 auszuüben, um den Endteil 13 mit seiner Stirnfläche 16 in die Öffnung 17 hineinzudrücken. Wie anhand der Figur 2 leicht erkennbar, ist nun der Scharnierbolzen 11 gegen eine axiale Verschiebung gesichert. Bei größeren Widerstand gegen Verformung kann ein Werkzeug, insbesondere ein Hammer, benutzt werden. Unabhängig davon, wie die Verformung herbeigeführt wird, verhindert der Bereich 15 mit geschwächtem Querschnitt, daß die Verformung auf den geraden Bolzenteil 12 übergreift und die Leichtgängigkeit der Scharnieranordnung beeinträchtigt wird.

Soll die Tür 2 aus beliebigem Anlaß von dem Schaltschrank abgenommen werden, so kann die vorstehend beschriebene Verformung des Scharnierbolzens gleichfalls durch eine bleibende Verformung rückgängig gemacht werden. Die gezeigte bogenförmige Gestaltung des Zwischenteiles 14 erlaubt hierbei gleichermaßen einen günstigen Kraftangriff von Hand oder mittels allgemein verfügbarer Werkzeuge wie Zange, Schraubendreher oder Haken.

**Patentansprüche**

1.  Scharnieranordnung für eine aus Blech bestehende und mit einer randseitigen Abkantung versehene Tür eines Schaltschrankes, mit einem ortsfesten Scharnierarm und einem an der Tür befestigten Scharnierbock sowie mit einem Scharnierbolzen, der aus einem Rundmaterial besteht und einen fluchtende Durchtrittsöffnungen des Scharnierarmes und des Scharnierbockes durchsetzenden geraden Bolzenabschnitt und einen krückenartig gebogenen, eine Stirnfläche aufweisenden Endteil besitzt, der etwa rechtwinklig zur Längsachse des Bolzenabschnittes gerichtet ist, **dadurch gekennzeichnet,** daß der Scharnierbolzen (11) aus einem bleibend verformbaren Werkstoff besteht, daß ferner zwischen dem krückenartig geformten Endteil (13) und dem Bolzenteil (12) ein Zwischenteil (14) angeordnet ist und daß im Bereich der Abkantung der Tür (2) eine der Stirnfläche (16) des Endteiles (13) mit geringem Abstand gegenüberstehende Öffnung (17) für den Eingriff des Endteiles (13) angeordnet ist.

2.  Scharnieranordnung nach Anspruch 1, **dadurch gekennzeichnet,** daß etwa am Übergang zwischen dem geraden Bolzenteil (12) und dem Zwischenteil (14) ein Bereich (15) mit geschwächtem Querschnitt vorgesehen ist.

3.  Scharnieranordnung nach Anspruch 2, **dadurch gekennzeichnet,** daß der Zwischenteil (14) mit gleicher oder wechselnder Richtung kreisbogenförmig ausgebildet und an den Bereich (15) mit geschwächtem Querschnitt unmittelbar anschließend angeordnet ist.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 359 857 (D. RAMSAUER) <br> * Spalte 1, Zeile 1 - Zeile 16 * <br> * Spalte 8, Zeile 42 - Spalte 9, Zeile 9 * <br> * Spalte 10, Zeile 2 - Zeile 41 * <br> * Spalte 11, Zeile 53 - Spalte 13, Zeile 12; <br> Abbildungen 7-10,14 * <br> & EP-A-0 223 871 (D. RAMSAUER) <br> * Spalte 1, Zeile 32 - Zeile 37 * <br> --- | 1 | E05D5/12 <br> E05D7/10 <br> H02B1/38 |
| Y | US-A-2 766 901 (J. SUNKO) <br> * das ganze Dokument * <br> --- | 1 | |
| A | DE-U-8 910 312 (KLOCKNER-MOELLER ELEKTRIZITATS GMBH) <br> * das ganze Dokument * <br> --- | 1 | |
| D,A | EP-A-0 192 520 (SAREL APPAREILLAGE ELECTRIQUE S.A.) <br> * das ganze Dokument * | 1 | |
| | ----- | | **RECHERCHIERTE SACHGEBIETE (Int. Cl.5 )** <br><br> E05D <br> H02B |

Der vorliegende Recherchenbericht wurde für alle Patentansprüche erstellt

| Recherchenort | Abschlußdatum der Recherche | Prüfer |
|---|---|---|
| DEN HAAG | 30 JULI 1992 | DELZOR F.N.M. |

EPO FORM 1503 03.82 (P0403)